# EUROPEAN PATENT SPECIFICATION

(11) **EP 2 912 139 B1**
(45) Date of publication and mention of the grant of the patent: **29.03.2017**
(21) Application number: 13773527.0
(22) Date of filing: 24.09.2013
(51) Int. Cl.: C09K 8/80, E21B 43/267

(54) **WELLBORE SERVICING FLUIDS COMPRISING FOAMED MATERIALS AND METHODS OF MAKING AND USING SAME**
BOHRLOCHWARTUNGSFLUIDE MIT GESCHÄUMTEN STOFFEN UND VERFAHREN ZUR HERSTELLUNG UND VERWENDUNG DAVON
FLUIDES D'ENTRETIEN POUR PUITS CONTENANT DES SUBSTANCES EXPANSÉES ET LEURS PROCÉDÉS DE FABRICATION ET D'UTILISATION

(30) Priority: 26.10.2012 US 201213662000
(43) Date of publication of application: 02.09.2015
(73) Proprietor: Halliburton Energy Services, Inc., Houston, TX 77032-3219 (US)
(72) Inventor: TANG, Tingji, Spring, Texas 77386 (US); NGUYEN, Philip D., Houston, TX 77044 (US)
(74) Representative: Hoffmann Eitle
(86) International application number: PCT/US2013/061437
(87) International publication number: WO 2014/065976

(56) References cited:
- US-A1- 2006 113 078
- US-A1- 2006 175 058
- US-A1- 2011 120 712

## Description

### BACKGROUND

### Field

This disclosure relates to methods of servicing a wellbore. More specifically, it relates to wellbore servicing fluids comprising foamed materials and methods of making and using same.

### Background

Natural resources (e.g., oil or gas) residing in the subterranean formation may be recovered by driving resources from the formation into the wellbore using, for example, a pressure gradient that exists between the formation and the wellbore, the force of gravity, displacement of the resources from the formation using a pump or the force of another fluid injected into the well or an adjacent well. The production of fluid in the formation may be increased by hydraulically fracturing the formation. That is, a viscous fracturing fluid may be pumped down the wellbore at a rate and a pressure sufficient to form fractures that extend into the formation, providing additional pathways through which the oil or gas can flow to the well.

To maintain the fractures open when the fracturing pressures are removed, a propping agent (i.e., a proppant) may be used. Proppant packs are typically introduced into the wellbore and surrounding formation during fracturing and completion operations in order to provide a structural frame for both downhole support and fluid collection. However, while delivering a proppant into the wellbore, the proppant may settle in the wellbore servicing fluid (e.g., fracturing fluid) in which it is suspended, due to the higher density of the proppant when compared to that of the fluid. Thus an ongoing need exists for improved methods of proppant delivery.

US 2006/0113078 discloses a method of propping at least one fracture in a subterranean formation, that comprises forming a plurality of proppant aggregates, each proppant aggregate comprising a binding fluid and a filler material, and introducing the plurality of proppant aggregates into the at least one fracture.

US 2011/120712 discloses a method of increasing the fracture complexity in a treatment zone of a subterranean formation. The method includes the step of pumping one or more fracturing fluids into a far-field region of a treatment zone of the subterranean formation at a rate and pressure above the fracture pressure of the treatment zone. A first fracturing fluid of the one or more fracturing fluids includes a first solid particulate, wherein: (a) the first solid particulate includes a particle size distribution for bridging the pore throats of a proppant pack previously formed or to be formed in the treatment zone; and (b) the first solid particulate comprises a degradable material.

### SUMMARY

Disclosed herein is a method of servicing a wellbore in a subterranean formation comprising placing a wellbore servicing fluid comprising a proppant-associated foamed material into the subterranean formation via the wellbore and altering the structural integrity of the proppant-associated foamed material; wherein the proppant associated foamed material comprises (i) a proppant and (ii) a foamed material comprising a degradable material; and wherein the structural integrity of the proppant-associated foamed material is altered by contact with a degradation agent which degrades the degradable material.

Also disclosed herein is a wellbore servicing fluid comprising a proppant-loaded foamed material comprising a polylactide, a resin-coated sand, and a carrier fluid.

### BRIEF DESCRIPTION OF THE DRAWINGS

For a more complete understanding of the present disclosure and the advantages thereof, reference is now made to the following brief description, taken in connection with the accompanying drawings and detailed description, wherein like reference numerals represent like parts.

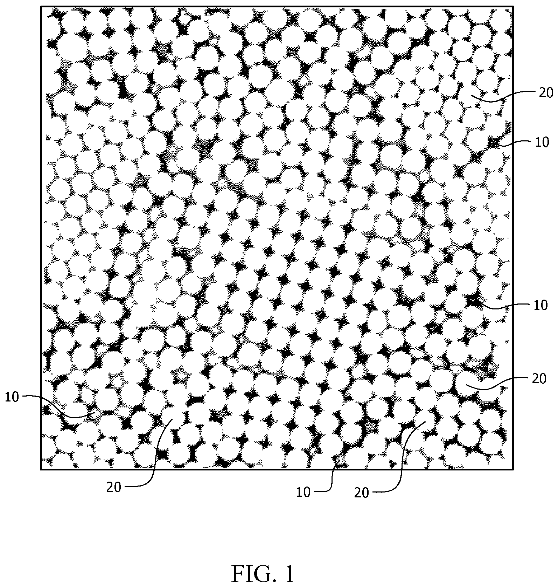

Figure 1 is a microscopic image of a polystyrene foam.

### DETAILED DESCRIPTION

Disclosed herein are wellbore servicing fluids or compositions comprising an associated foamed material (AFM). In some embodiments, the components are associated in any manner that affords the about concurrent transport of the components of the AFMs during a portion of a wellbore servicing operation. The AFMs comprise a first component which is effective as a carrier and a second component which is effective as a cargo. In an embodiment, the carrier comprises a material effective to and/or capable of engulfing, embedding, confining, surrounding, encompassing, enveloping, or otherwise retaining the cargo such that the carrier and cargo are transported downhole as a single material (i.e., AFM). The cargo comprises a material that is carried or otherwise transported by the carrier material. The carrier is a foamed material and the cargo may be distributed or dispersed throughout the material, contained within a portion of the foamed material, at least partially entangled or entwined with the foamed material, or otherwise associated with the foamed material such that the cargo and carrier are transported downhole about concurrently. Further it is to be understood the carrier confines the cargo to the extent necessary to facilitate the about concurrent transport of both materials into the wellbore and further that within the wellbore the carrier and cargo are located proximate to each other, for example in intimate contact. In an embodiment, the carrier encapsulates the cargo. For example, the cargo may be disposed within the carrier such that the entirety of the dimensions of the cargo lies within the dimensions of the carrier. Alternatively, at least a portion of the cargo is disposed within one or more internal spaces of the carrier. Alternatively, the cargo replaces some portion of the material typically found within the carrier. In an embodiment, the cargo is dispersed throughout the carrier and the carrier and cargo form a composite material. In an embodiment the cargo when placed downhole may be said to be limited to the confines dictated by the external or internal dimensions of the carrier.

In the invention, the carrier comprises a foamed material (FM) and the cargo comprises a proppant material (PM). In such instances, the AFM is a proppant-associated foamed material (PAFM). Hereinafter the disclosure will refer to a PAFM.

In an embodiment, the FM comprises any substance compatible with the other components of the wellbore servicing fluid and that is formed by trapping pockets of gas in a liquid or solid. In an embodiment the FM comprises an open-cell structure foam which herein refers to a low porosity, low density foam typically containing pores that are connected to each other. In an embodiment, the FM comprises a closed cell-structure foam which herein refers to a foam characterized by pores which are not connected to each other and a higher density and compressive strength when compared to open-cell structure foams.

In an embodiment, the FM may be comprised of a naturally-occurring material. Alternatively, the FM comprises a synthetic material. Alternatively, the FM comprises a mixture of a naturally-occurring and synthetic material. FMs for use in the invention are degradable materials (DMs), and may comprise combinations of hydrocarbon-based materials (HBMs) and DMs. In some embodiments, an HBM is also a DM or vice versa.

In an embodiment, the FM is a HBM. HBMs suitable for use in this disclosure may comprise polyethylene, polypropylene, polystyrene, hydrocarbon-based rubbers, (e.g., latex), copolymers thereof, derivatives thereof, or combinations thereof. The term "derivative" herein is defined herein to include any compound that is made from one or more of the HBMs, for example, by replacing one atom in the HBM with another atom or group of atoms, rearranging two or more atoms in the HBM, ionizing one of the HBMs, or creating a salt of one of the HBMs. The term "copolymer" as used herein is not limited to the combination of two polymers, but includes any combination of any number of polymers, e.g., graft polymers, terpolymers and the like.

In the invention, the FM is a DM where the DMs comprise a degradable material that may undergo irreversible degradation downhole. As used herein "degradation" refers to conversion of the material into simpler compounds that do not retain all the characteristics of the starting material. The terms "degradation" or "degradable" may refer to either or both of heterogeneous degradation (or bulk erosion) and/or homogeneous degradation (or surface erosion), and/or to any stage of degradation in between these two. Not intending to be bound by theory, degradation may be a result of, *inter alia,* an external stimuli (e.g., heat, temperature, pH, etc.). As used herein, the term "irreversible" means that the degradable material, once degraded downhole, should not recrystallize or reconsolidate while downhole.

In an embodiment the DM comprises a degradable polymer. Herein the disclosure may refer to a polymer and/or a polymeric material. It is to be understood that the terms polymer and/or polymeric material herein are used interchangeably and are meant to each refer to compositions comprising at least one polymerized monomer in the presence or absence of other additives traditionally included in such materials. Examples of degradable polymers suitable for use as the DM include, but are not limited to homopolymers, random, block, graft, star- and hyper-branched aliphatic polyesters, and combinations thereof. In an embodiment, the degradable polymer comprises polysaccharides; lignosulfonates; chitins; chitosans; proteins; proteinous materials; fatty alcohols; fatty esters; fatty acid salts; aliphatic polyesters; poly(lactides); poly(glycolides); poly(ε-caprolactones); polyoxymethylene; polyurethanes; poly(hydroxybutyrates); poly(anhydrides); aliphatic polycarbonates; polyvinyl polymers; acrylic-based polymers; poly(amino acids); poly(aspartic acid); poly(alkylene oxides); poly(ethylene oxides); polyphosphazenes; poly(orthoesters); poly(hydroxy ester ethers); polyether esters; polyester amides; polyamides; polyhydroxyalkanoates; polyethyleneterephthalates; polybutyleneterephthalates; polyethylenenaphthalenates, and copolymers, blends, derivatives, or combinations thereof. In an embodiment, the DMs comprise BIOFOAM. BIOFOAM is a biodegradable plant-based foam commercially available from Synbra.

Additional descriptions of degradable polymers suitable for use in the present disclosure may be found in the publication of Advances in Polymer Science, Vol. 157 entitled "Degradable Aliphatic Polyesters" edited by A.C. Albertsson.

In an embodiment, the degradable polymer comprises solid cyclic dimers, or solid polymers of organic acids. Alternatively, the degradable polymer comprises substituted or unsubstituted lactides, glycolides, polylactic acid (PLA), polyglycolic acid (PGA), copolymers of PLA and PGA, copolymers of glycolic acid with other hydroxy-, carboxylic acid-, or hydroxycarboxylic acid-containing moieties, copolymers of lactic acid with other hydroxy-, carboxylic acid-, or hydroxycarboxylic acid-containing moieties, or combinations thereof.

In an embodiment, the degradable polymer comprises an aliphatic polyester which may be represented by the general formula of repeating units shown in Formula I: 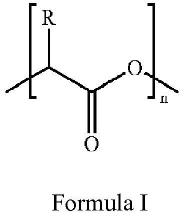 where n is an integer ranging from about 75 to about 10,000, alternatively from about 100 to about 500, or alternatively from about 200 to about 2000 and R comprises hydrogen, an alkyl group, an aryl group, alkylaryl groups, acetyl groups, heteroatoms, or combinations thereof.

In an embodiment, the aliphatic polyester comprises poly(lactic acid) or polylactide (PLA). Because both lactic acid and lactide can achieve the same repeating unit, the general term poly(lactic acid), as used herein, refers to Formula I without any limitation as to how the polymer was formed (e.g., from lactides, lactic acid, or oligomers) and without reference to the degree of polymerization or level of plasticization.

Also, as will be understood by one of ordinary skill in the art, the lactide monomer may exist, generally, in one of three different forms: two stereoisomers L- and D-lactide and racemic D,L-lactide (meso-lactide). The oligomers of lactic acid, and oligomers of lactide suitable for use in the present disclosure may be represented by general Formula II: 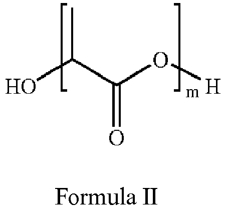 where m is an integer 2 ≤ m ≤ 75, alternatively, m is an integer and 2 ≤ m ≤ 10. In such an embodiment, the molecular weight of the PLA may be less than about 5,400 g/mole, alternatively, less than about 720 g/mole, respectively. The stereoisomers of lactic acid may be used individually or combined to be used in accordance with the present disclosure.

In an additional embodiment, the degradable polymer comprises a copolymer of lactic acid. A copolymer of lactic acid may be formed by copolymerizing one or more stereoisomers of lactic acid with, for example, glycolide, ε-caprolactone, 1,5-dioxepan-2-one, or trimethylene carbonate, so as to obtain polymers with different physical and/or mechanical properties that are also suitable for use in the present disclosure. In an embodiment, degradable polymers suitable for use in the present disclosure are formed by blending, copolymerizing or otherwise mixing the stereoisomers of lactic acid. Alternatively, degradable polymers suitable for use in the present disclosure are formed by blending, copolymerizing or otherwise mixing high and/or low molecular weight polylactides. Alternatively, degradable polymers suitable for use in the present disclosure are formed by blending, copolymerizing or otherwise mixing polylactide with other polyesters. In an embodiment, the degradable polymer comprises PLA which may be synthesized using any suitable methodology. For example, PLA may be synthesized either from lactic acid by a condensation reaction or by a ring-opening polymerization of a cyclic lactide monomer. Methodologies for the preparation of PLA are described in U.S. Patent Nos. 6,323,307; 5,216,050; 4,387,769; 3,912,692; and 2,703,316.

In an embodiment, the degradable polymer comprises a polyanhydride. Examples of polyanhydrides suitable for use in the present disclosure include, but are not limited to poly(adipic anhydride), poly(suberic anhydride), poly(sebacic anhydride), poly(dodecanedioic anhydride), poly(maleic anhydride), poly(benzoic anhydride), or combinations thereof.

In an embodiment, the degradable polymer comprises polysaccharides, such as starches, cellulose, dextran, substituted or unsubstituted galactomannans, guar gums, high-molecular weight polysaccharides composed of mannose and galactose sugars, heteropolysaccharides obtained by the fermentation of starch-derived sugar (e.g., xanthan gum), diutan, scleroglucan, derivatives thereof, or combinations thereof.

In an embodiment, the degradable polymer comprises guar or a guar derivative. Nonlimiting examples of guar derivatives suitable for use in the present disclosure include hydroxypropyl guar, carboxymethylhydroxypropyl guar, carboxymethyl guar, hydrophobically modified guars, guar-containing compounds, synthetic polymers, or combinations thereof.

In an embodiment, the degradable polymer comprises cellulose or a cellulose derivative. Nonlimiting examples of cellulose derivatives suitable for use in the present disclosure include cellulose ethers, carboxycelluloses, carboxyalkylhydroxyethyl celluloses, hydroxyethylcellulose, hydroxypropylcellulose, carboxymethylhydroxyethylcellulose, carboxymethylcellulose, or combinations thereof.

In an embodiment, the degradable polymer comprises a starch. Nonlimiting examples of starches suitable for use in the present disclosure include native starches, reclaimed starches, waxy starches, modified starches, pre-gelatinized starches, or combinations thereof.

In an embodiment, the degradable polymer comprises polyvinyl polymers, such as polyvinyl chloride, polyvinyl alcohols, polyvinyl acetate, partially hydrolyzed polyvinyl acetate, or combinations thereof.

In an embodiment, the degradable polymer comprises acrylic-based polymers, such as acrylic acid polymers, acrylamide polymers, acrylic acid-acrylamide copolymers, acrylic acid-methacrylamide copolymers, polyacrylamides, polymethacrylamides, partially hydrolyzed polyacrylamides, partially hydrolyzed polymethacrylamides, ammonium and alkali metal salts thereof, or combinations thereof.

In an embodiment, the degradable polymer comprises polyamides, such as polycaprolactam derivatives, poly-paraphenylene terephthalamide or combinations thereof. In an embodiment, the degradable polymer comprises Nylon 6,6; Nylon 6; KEVLAR, or combinations thereof.

The physical properties associated with the degradable polymer may depend upon several factors including, but not limited to, the composition of the repeating units, flexibility of the polymer chain, the presence or absence of polar groups, polymer molecular mass, the degree of branching, polymer crystallinity, polymer orientation, or the like. For example, a polymer having substantial short chain branching may exhibit reduced crystallinity while a polymer having substantial long chain branching may exhibit for example, a lower melt viscosity and impart, *inter alia,* elongational viscosity with tension-stiffening behavior. The properties of the degradable polymer may be further tailored to meet some user and/or process designated goal using any suitable methodology such as blending and copolymerizing the degradable polymer with another polymer, or by changing the macromolecular architecture of the degradable polymer (e.g., hyper-branched polymers, star-shaped, or dendrimers, etc.).

In an embodiment, in choosing the appropriate degradable polymer, an operator may consider the degradation products that will result. For example, an operator may choose the degradable polymer such that the resulting degradation products do not adversely affect one or more other operations, treatment components, the formation, or combinations thereof. Additionally, the choice of degradable polymer may also depend, at least in part, upon the conditions of the well.

Nonlimiting examples of degradable polymers suitable for use in conjunction with the methods of this disclosure are described in more detail in U.S. Patent Nos. 7,565,929 and 8,109,335, and U.S. Patent Publication Nos. 20100273685 A1, 20110005761 A1, 20110056684 A1 and 20110227254 A1.

In an embodiment, the degradable polymer further comprises a plasticizer. The plasticizer may be present in an amount sufficient to provide one or more desired characteristics, for example, (a) more effective compatibilization of the melt blend components, (b) improved processing characteristics during the blending and processing steps, (c) control and regulation of the sensitivity and degradation of the polymer by moisture, (d) control and/or adjust one or more properties of the foam (e.g., strength, stiffness, etc.), or combinations thereof. Plasticizers suitable for use in the present disclosure include, but are not limited to, derivatives of oligomeric lactic acid, such as those represented by the formula: 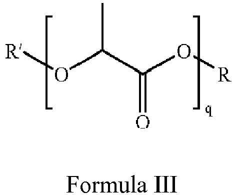 where R and/or R' are each a hydrogen, an alkyl group, an aryl group, an alkylaryl group, an acetyl group, a heteroatom, or combinations thereof provided that R and R' cannot both be hydrogen and that both R and R' are saturated; q is an integer where the value of q ranges from greater than or equal to 2 to less than or equal to 75 or alternatively from greater than or equal to 2 to less than or equal to 10. As used herein the term "derivatives of oligomeric lactic acid" may include derivatives of oligomeric lactide. In an embodiment where a plasticizer of the type disclosed herein is used, the plasticizer may be intimately incorporated within the degradable polymeric materials.

FMs of the type described herein (e.g., HBM or DM) may be foamed using any suitable methodology compatible with the methods of the present disclosure. Methods of foaming materials of the type disclosed herein (e.g., degradable polymers) include without limitation gas foaming, chemical agent foaming, injection molding, compression molding, extrusion molding, extrusion, melt extrusion, pressure reduction/vacuum induction, or any suitable combination of these methods. In some embodiments, the AFM (e.g., PAFM) is formed by foaming the FM in the presence of the cargo (e.g., PM).

In an embodiment, the FM may be prepared from a composition comprising a polymer and a foaming agent. The polymer may be of the type described previously herein (e.g., polystyrene, polylactide). The foaming agent may be any foaming agent compatible with the other components of the FM such as for example physical blowing agents, chemical blowing agents, and the like.

In an embodiment, the foaming agent is a physical blowing agent. Physical blowing agents are typically nonflammable gases that are able to evacuate the composition quickly after the foam is formed. Examples of physical blowing agents include without limitation pentane, carbon dioxide, nitrogen, water vapor, propane, n-butane, isobutane, n-pentane, 2,3-dimethylpropane, 1-pentene, cyclopentene, n-hexane, 2-methylpentane, 3-methylpentane, 2,3-dimethylbutane, 1-hexene, cyclohexane, n-heptane, 2-methylhexane, 2,2-dimethylpentane, 2,3-dimethylpentane, and combinations thereof. In an embodiment, the physical blowing agent is incorporated into the polymeric composition in an amount of from about 0.1 wt.% to about 10 wt.%, alternatively from about 0.1 wt.% to about 5.0 wt.% , or alternatively from about 0.5 wt.% to about 2.5 wt.%, wherein the weight percent is based on the total weight of the polymeric composition (e.g., degradable material).

In an embodiment, the foaming agent is a chemical foaming agent, which may also be referred to as a chemical blowing agent. A chemical foaming agent is a chemical compound that decomposes endothermically at elevated temperatures. A chemical foaming agent suitable for use in this disclosure may decompose at temperatures of from about 121 °C to about 299 °C (about 250 °F to about 570 °F), alternatively from about 166 °C to about 204 °C (about 330 °F to about 400 °F). Decomposition of the chemical foaming agent generates gases that become entrained in the polymer thus leading to the formation of voids within the polymer. In an embodiment, a chemical foaming agent suitable for use in this disclosure may have a total gas evolution of from about 20 ml/g to about 200 ml/g, alternatively from about 75 ml/g to about 150 ml/g, or alternatively from about 110 ml/g to about 130 ml/g. Examples of chemical foaming agents suitable for use in this disclosure include without limitation SAFOAM FP-20, SAFOAM FP-40, SAFOAM FPN3-40, all of which are commercially available from Reedy International Corporation.

In an embodiment, the chemical foaming agent may be incorporated in the polymeric composition (e.g., HBM, DM) in an amount of from about 0.10 wt.% to about 5 wt.% by total weight of the polymeric composition (e.g., degradable material), alternatively from about 0.25 wt.% to about 2.5 wt.%, or alternatively from about 0.5 wt.% to about 2 wt.%.

In an embodiment, the FM is prepared by contacting the degradable polymer with the foaming agent, and thoroughly mixing the components for example by compounding or extrusion. In an embodiment, the FM is plasticized or melted by heating in an extruder and is contacted and mixed thoroughly with a foaming agent of the type disclosed herein at a temperature of less than about 260 °C, alternatively less than about 177 °C, alternatively from about 16°C to about 163 °C, or alternatively from about 49 °C to about 121 °C (about 500 °F, alternatively less than about 350 °F, alternatively from about 60°F to about 325 °F, or alternatively from about 120 °F to about 250 °F). Alternatively, the FM may be contacted with the foaming agent prior to introduction of the mixture to the extruder (e.g., via bulk mixing), during the introduction of the polymer to an extruder, or combinations thereof. Methods for preparing a foamed polymer composition are described for example in U.S. Patent Publication Nos. 20090246501 A1, and U.S. Patents Nos. 5,006,566 and 6,387,968.

The FMs of this disclosure may be converted to foamed particles by any suitable method. The foamed particles may be produced about concurrently with the mixing and/or foaming of the FMs (e.g., on a sequential, integrated process line) or may be produced subsequent to mixing and/or foaming of the FM (e.g., on a separate process line such as an end use compounding and/or thermoforming line). In an embodiment, the FM is mixed and foamed via extrusion as previously described herein, and the molten FM is fed to a shaping process (e.g., mold, die, lay down bar, etc.) where the FM is shaped. The foaming of the FM may occur prior to, during, or subsequent to the shaping. In an embodiment, molten FM is injected into a mold, where the FM undergoes foaming and fills the mold to form a shaped article (e.g., beads, block, sheet, and the like), which may be subjected to further processing steps (e.g., grinding, milling, shredding, etc.).

In an embodiment, the FMs are further processed by mechanically sizing, cutting or, chopping the FM into particles using any suitable methodologies for such processes. The FMs suitable for use in this disclosure comprise foamed particles of any suitable geometry, including without limitation beads, hollow beads, spheres, ovals, fibers, rods, pellets, platelets, disks, plates, ribbons, and the like, or combinations thereof.

In an embodiment, the porosity of a FM suitable for use in this disclosure may range from about 20 volume percent (vol. %) to about 90 vol. %, alternatively from about 30 vol. % to about 70 vol. %, or alternatively from about 40 vol. % to about 50 vol. %. The porosity of a material is defined as the percentage of volume that the pores (i.e., voids, empty spaces) occupy based on the total volume of the material. The porosity of the EDM may be determined using a porosity tester such as the Foam Porosity Tester F0023 which is commercially available from IDM Instruments.

In an embodiment, the pore size of a FM suitable for use in this disclosure may range from about 50 microns to about 2,000 microns, alternatively from about 100 microns to about 1,000 microns, or alternatively from about 200 microns to about 500 microns. The pore size of the material may be determined using any suitable methodology such as scanning electron microscopy, atomic force microscopy, or a porometer.

In an embodiment, the compressive strength of a FM suitable for use in this disclosure may range from about 3,450 to about 345,000 Pa, alternatively from about 6890 Pa to about 138,000 Pa, or alternatively from about 13,800 Pa to about 68,900 Pa (about 0.5 psi to about 50 psi, alternatively from about 1 psi to about 20 psi, or alternatively from about 2 psi to about 10 psi). The compressive strength of the material may be determined by unconfined compressive strength (UCS) measurement.

In an embodiment, the FM comprises porous particles having an average particle size ranging from about 0.1 mm to about 5 mm, alternatively from about 0.5 mm to about 3 mm, or alternatively from about 1 mm to about 2 mm. The average particle size of the FM may be determined by microscopy measurements.

In an embodiment, FM particles suitable for use in conjunction with the methods of this disclosure comprise FMs having a bulk density from about 0.05 g/cc to about 1 g/cc, alternatively from about 0.1 g/cc to about 0.5 g/cc, or alternatively from about 0.1 g/cc to about 0.2 g/cc, as determined by densitometry. In an embodiment, the PM comprises a particulate material which may be used to prop fractures open, i.e., a propping agent or a proppant. As used herein, a proppant refers to a particulate material that is suitable for use in a proppant pack or a gravel pack. When deposited in the fracture, the proppant may form a proppant pack, resulting in conductive channels through which fluids may flow to the wellbore. The proppant functions to prevent the fractures from closing due to overburden pressures.

In an embodiment, the proppant comprises a naturally-occurring material. Alternatively, the proppant comprises a synthetic material. Alternatively, the proppant comprises a mixture of a naturally-occurring and a synthetic material.

Examples of proppants suitable for use in this disclosure include without limitation ground or crushed shells of nuts, walnuts, pecans, almonds, ivory nuts, brazil nuts, and the like; ground or crushed seed shells (including fruit pits) of seeds of fruits, plums, peaches, cherries, apricots, and the like; ground or crushed seed shells of other plants (e.g., maize, corn cobs or corn kernels); crushed fruit pits or processed wood materials, materials derived from woods, oak, hickory, walnut, poplar, mahogany, and the like, including such woods that have been processed by grinding, chipping, or other form of particleization; glass; sintered bauxite; quartz; aluminum pellets; silica (sand), Ottawa sands, Brady sands, Colorado sands; resin-coated sands; gravels; synthetic organic particles, nylon pellets, high density plastics, teflons, rubbers, resins; ceramics, aluminosilicates; or combinations thereof. In an embodiment, the proppant comprises a resin-coated naturally-occurring sand.

The proppants may be of any suitable size and/or shape. Proppant particle size may be chosen by considering a variety of factors such as the particle size and distribution of the formation sand to be screened out by the proppant. In an embodiment, a PM suitable for use in the present disclosure may have an average particle size in the range of from about 9.52 to about 0.037 mm, alternatively from about 2.38 to about 0.149 mm, or alternatively about 2.00 to about 0.210 mm (about 2 to about 400 mesh, alternatively from about 8 to about 100 mesh, or alternatively about 10 to about 70 mesh, U.S. Sieve Series).

In an embodiment the proppant comprises sand, gravel or combinations thereof. In an embodiment, the proppant excludes silt, which is defined as having a particle size ranging in diameter from about 0.0625 mm (1/16 mm) down to about 0.004 mm.

In an embodiment, the proppants may have a bulk density of from about 1.5 g/cc to about 4 g/cc, alternatively from about 2 g/cc to about 3.8 g/cc, or alternatively from about 2.6 g/cc to about 3.6 g/cc.

In an embodiment, the proppant particles are resin-coated. Without wishing to be limited by theory, a resin-coated proppant may display improved associations with the FM thereby facilitating suspension of the PM. Nonlimiting examples of resins suitable for use in this disclosure for coating proppants include hardenable (i.e., curable) organic resins, thermoplastic materials, acrylic-based resins, two-component epoxy-based resins, furan-based resins, phenolic-based resins, high-temperature (HT) epoxy-based resins, phenol/phenol formaldehyde/furfuryl alcohol resins, polyepoxide resins, bisphenol A-epichlorohydrin resins, polyester resins, phenol-aldehyde resins, urea-aldehyde resins, urethane resins, novolac resins, glycidyl ethers, or combinations thereof. Resin materials suitable for use in conjunction with this disclosure are described more in detail in U.S. Patent Nos. 6,257,335 and 7,541,318.

In an embodiment, a resin-to-sand coupling agent is utilized in the hardenable resin compositions to promote coupling or adhesion of the resin to the sand and other silicious materials.

In an embodiment, the resin-to-sand coupling agent comprises an aminosilane compound or a mixture of aminosilane compounds. Nonlimiting examples of resin-to-sand coupling agents include N-β-(aminoethyl)- γ-aminopropyltrimethoxysilane, N- β-(aminoethyl)-N-β-(aminoethyl)-γ-aminopropyltrimethoxysilane, N- β-(aminopropyl)-N- β-(aminobutyl)- γ-aminopropyltriethoxysilane and N- β-(aminopropyl)- γ-aminopropyltriethoxysilane. In an embodiment, the resin-to-sand coupling agent comprises N-β-(aminoethyl)- γ-aminopropyltrimethoxysilane. Resin-coated proppants suitable for use in conjunction with this disclosure are described more in detail in U.S. Patent No. 5,960,880.

In an embodiment, the PM comprises one or more components of PROPSTOP and PROPSTOP ABC services, SANDTRAP and SANDTRAP ABC formation consolidation services, EXPEDITE service, SANDWEDGE and SANDWEDGE ABC conductivity enhancement systems, or combinations thereof. PROPSTOP and PROPSTOP ABC services are aqueous-based systems to help control proppant flowback; SANDTRAP and SANDTRAP ABC formation consolidation services are aqueous based systems to help control sand production; EXPEDITE service is an on-the-fly exclusive direct proppant coating process to apply a proprietary resin mixture to all the proppant used in a fracturing treatment to help enhance or maintain proppant pack conductivity; and SANDWEDGE and SANDWEDGE ABC conductivity enhancement services are proppant pack conductivity enhancers that rely on resin coating the proppant to provide improved and sustained fracture conductivity; each of which is commercially available from Halliburton Energy Services.

The PM and FM are each present in amounts effective to form a PAFM. Thus, the amount of PM may range from about 10x to about 500x the weight of the FM, alternatively from about 20x to about 200x, or alternatively from about 50x to about 100x while the amount of FM may range from about 10x to about 500x the volume of the PM, alternatively from about 20x to about 200x, or alternatively from about 50x to about 100x. In an embodiment, the PAFM comprises from about 10 wt.% to about 50 wt.% PM and from about 50 wt.% to about 90 wt.% FM based on the total weight of the PAFM.

A PM of the type disclosed herein is associated with a FM of the type disclosed herein using any suitable methodology to form a PAFM.

In an embodiment, prior to formation of the PAFM the PM is treated (e.g., coated) with a resin to facilitate the association of the PM and FM as discussed herein. In another embodiment, prior to formation of the PAFM the FM is treated with a resin. In yet another embodiment, prior to formation of the PAFM both the PM and FM are treated with a resin.

A method of forming a PAFM of the type disclosed herein may comprise contacting of a first component comprising a particulate FM and a second component comprising a proppant-laden slurry. In such embodiments, the PAFM may be formed by impregnation of the FM component with the PM slurry under conditions suitable for association of the PM with the FM. For example, the FM and the PM slurry component may be mixed together under various pressure conditions (e.g., ambient pressure, vacuum over-pressured), such that the PM becomes associated with or otherwise disposed within the FM. In an embodiment, the PM slurry is absorbed by or diffused into the FM using for example a pressure differential or a pressure and/or concentration gradient. In such embodiments, the association of the PM and FM may be reversed for example by inversion of the pressure and/or concentration gradient.

In an embodiment, the first component comprises a FM of the type described previously herein. The FM may be in bulk form such that it is in the shape of a block, bar, sheet, and the like. The second component may comprise a slurry of a PM of the type described previously herein. In such embodiments, the FM may be subjected to vacuum to remove the air and/or gas phase trapped inside its pores. Subsequently, the FM may be impregnated with the PM slurry using techniques such as incipient wetness impregnation. For example, the FM and the PM may be mixed together under pressure, such that the PM becomes associated with or otherwise disposed within the FM. The assembled PAFM and/or components thereof may be further mechanically sized into foamed material particulates using any suitable methodology (e.g., cutting, chopping, and the like).

In an embodiment, an FM may be foamed as previously described herein in the presence of a PM of the type disclosed herein, resulting in the PM being entrapped and/or dispersed within the FM, forming the PAFM. The PAFM may be further mechanically sized into foamed material particulates using any suitable methodology (e.g., cutting, chopping, and the like).

In an embodiment, the PM comprises sand and the FM comprises polystyrene. Figure 1 displays a microscopic image of a cross-section of a polystyrene foam, wherein the polymeric material (i.e., polystyrene 10) has been formed into a foam with voids (i.e., pores) 20. The PAFM may be formed by first subjecting the FM (e.g., polystyrene) to a vacuum under conditions suitable to evacuate some portion of the gas occupying the FM pores 20. Subsequently, the FM and PM are contacted under conditions suitable for entrapment of the PM in the pores of the FM. In an embodiment, the PM comprises sand proppant particles coated with an EXPEDITE-type resin. In such embodiment, the EXPEDITE resin may cause the PM to adhere to the FM.

In an embodiment, the PM comprises sand and the FM comprises a polylactide. The PAFM may be formed by foaming the polylactide in the presence of the sand as previously described herein.

In an embodiment, the PM comprises sand proppant particles coated with a SANDWEDGE-type resin and the FM comprises a starch. The PAFM may be formed by impregnation of the FM with a PM-laden slurry under conditions suitable for association of the PM with the FM. In an embodiment, the FM is subjected to vacuum for evacuating the gas/air from the pores, and the FM and the PM then mixed together. Subsequently the pressure is returned to ambient pressure levels, such that the PM-laden slurry is absorbed into the FM pores.

A PAFM of the type disclosed herein may be included in any suitable wellbore servicing fluid. As used herein, a "servicing fluid" refers to a fluid used to drill, complete, work over, fracture, repair, or in any way prepare a wellbore for the recovery of materials residing in a subterranean formation penetrated by the wellbore. Examples of wellbore servicing fluids include, but are not limited to, cement slurries, drilling fluids or muds, spacer fluids, lost circulation fluids, fracturing fluids or completion fluids. The servicing fluid is for use in a wellbore that penetrates a subterranean formation. It is to be understood that "subterranean formation" encompasses both areas below exposed earth and areas below earth covered by water such as ocean or fresh water. In an embodiment, the PAFM may be present in a wellbore servicing fluid in an amount of from about 11.9 kg/m³ to about 3,000 kg/m³, alternatively from about 23.9 kg/m³ to about 1,800 kg/m³, or alternatively from about 60 kg/m³ to about 960 kg/m³ (about 0.1 pounds per gallon (ppg) to about 25 ppg, alternatively from about 0.2 ppg to about 15 ppg, or alternatively from about 0.5 ppg to about 8 ppg).

In an embodiment, the FM and the PM are manufactured and then contacted together at the well site, forming the PAFM as previously described herein. Alternatively, the FM and the PM are manufactured and then contacted together either off-site or on-the-fly (e.g., in real time or on-location), forming the PAFM as previously described herein. In another embodiment, either the FM or the PM would be preformed and the other one would be made on-the-fly, and the two materials would then be contacted together on-the-fly, forming the PAFM as previously described herein. When manufactured or assembled off site, the PM, FM and/or PAFM may be transported to the well site.

Alternatively, the PAFM may be assembled and prepared as a slurry in the form of a liquid additive. In an embodiment, the PAFM and a wellbore servicing fluid may be blended until the PAFM particulates are distributed throughout the fluid. By way of example, the PAFM particulates and a wellbore servicing fluid may be blended using a blender, a mixer, a stirrer, a jet mixing system, or other suitable device. In an embodiment, a recirculation system keeps the PAFM particulates uniformly distributed throughout the wellbore servicing fluid. In an embodiment, the wellbore servicing fluid comprises water, and may comprise at least one dispersant blended with the PAFM particulates and the water to reduce the volume of water required to suspend the PAFM particulates. An example of a suitable dispersant is CFR-3 cement friction reducer, which is a dispersant commercially available from Halliburton Energy Services, Inc.

When it is desirable to prepare a fracturing fluid for use in a wellbore, the fracturing fluid prepared at the wellsite or previously transported to and, if necessary, stored at the on-site location may be combined with the PAFM and with additional water and optional other additives to form the fracturing fluid composition.

In an embodiment, the proppant is a component of the PAFM. In an embodiment, the proppant as part of the PAFM is suspended in a fracturing fluid so that it is carried into the created fractures and deposited therein when the flow rate of the fracturing fluid and the pressure exerted on the fractured subterranean formation are reduced. In an embodiment, the PAFM may be added to the fracturing fluid and pumped downhole at the same time with additional proppant.

In an embodiment, a concentrated PAFM liquid additive is mixed with additional water to form a diluted liquid additive, which is subsequently added to a fracturing fluid. The additional water may comprise fresh water, salt water such as an unsaturated aqueous salt solution or a saturated aqueous salt solution, or combinations thereof. In an embodiment, the liquid additive comprising the PAFM is injected into a delivery pump being used to supply the additional water to a fracturing fluid composition. As such, the water used to carry the PAFM particulates and this additional water are both available to the fracturing fluid composition such that the PAFM may be dispersed throughout the fracturing fluid composition.

In an alternative embodiment, the PAFM prepared as a liquid additive is combined with a ready-to-use fracturing fluid as the fracturing fluid is being pumped into the wellbore. In such embodiments, the liquid additive may be injected into the suction of the pump. In such embodiments, the liquid additive can be added at a controlled rate to the fracturing fluid (e.g., or a component thereof such as blending water) using a continuous metering system (CMS) unit. The CMS unit can also be employed to control the rate at which the liquid additive is introduced to the fracturing fluid or component thereof as well as the rate at which any other optional additives are introduced to the fracturing fluid or component thereof. As such, the CMS unit can be used to achieve an accurate and precise ratio of water to PAFM concentration in the fracturing fluid such that the properties of the fracturing fluid (e.g., density, viscosity), are suitable for the downhole conditions of the wellbore. The concentrations of the components in the fracturing fluid, e.g., the PAFMs, can be adjusted to their desired amounts before delivering the composition into the wellbore. Those concentrations thus are not limited to the original design specification of the fracturing fluid composition and can be varied to account for changes in the downhole conditions of the wellbore that may occur before the composition is actually pumped into the wellbore.

In an embodiment, the wellbore servicing fluid comprises a composite treatment fluid. As used herein, the term "composite treatment fluid" generally refers to a treatment fluid comprising at least two component fluids. In such an embodiment, the two or more component fluids may be delivered into the wellbore separately via different flowpaths (e.g., such as via a flowbore, a wellbore tubular and/or via an annular space between the wellbore tubular and a wellbore wall/casing) and substantially intermingled or mixed within the wellbore (e.g., *in situ*) so as to form the composite treatment fluid. Composite treatment fluids are described in more detail in U.S. Patent Publication No. 20100044041 A1.

In an embodiment, the composite treatment fluid comprises a fracturing fluid (e.g., a composite fracturing fluid). In such an embodiment, the fracturing fluid may be formed from a first component and a second component. For example, in such an embodiment, the first component may comprise a proppant-laden slurry (e.g., a concentrated proppant-laden slurry pumped via a tubular flowbore) and the second component may comprise a fluid with which the proppant-laden slurry may be mixed to yield the composite fracturing fluid, that is, a diluent (e.g., an aqueous fluid, such as water pumped via an annulus). In an embodiment, the proppant-laden slurry comprises a PAFM-laden slurry.

In an embodiment, the proppant-laden slurry (e.g., the first component) comprises a base fluid, and proppants (e.g., a PAFM of the type disclosed herein). In an embodiment, the base fluid may comprise a substantially aqueous fluid. As used herein, the term "substantially aqueous fluid" may refer to a fluid comprising less than about 25% by weight of a non-aqueous component, alternatively, less than about 20% by weight, alternatively, less than about 15% by weight, alternatively, less than about 10% by weight, alternatively, less than about 5% by weight, alternatively, less than about 2.5% by weight, alternatively, less than about 1.0% by weight of a non-aqueous component. Examples of suitable substantially aqueous fluids include, but are not limited to, water that is potable or non-potable, untreated water, partially treated water, treated water, produced water, city water, well-water, surface water, or combinations thereof. In an alternative or additional embodiment, the base fluid may comprise an aqueous gel, a viscoelastic surfactant gel, an oil gel, a foamed gel, an emulsion, an inverse emulsion, or combinations thereof.

In an embodiment, the diluent (e.g., the second component) may comprise a suitable aqueous fluid, aqueous gel, viscoelastic surfactant gel, oil gel, a foamed gel, emulsion, inverse emulsion, or combinations thereof. For example, the diluent may comprise one or more of the compositions disclosed above with reference to the base fluid. In an embodiment, the diluent may have a composition substantially similar to that of the base fluid, alternatively, the diluent may have a composition different from that of the base fluid.

Once placed downhole, the PAFM may undergo one or more transformations such that the PM is no longer associated with the FM. In an embodiment, the PAFM when subjected to the pressures utilized for a fracturing operation undergoes a conformational distortion that results in expulsion of the PM from the FM. In the method according to the invention, the structural integrity of the FM is compromised as a result of interaction with one of the degradation agents or accelerators that function to degrade the components of the FM. The type of degradation agent or accelerator utilized will depend on the nature of the FM. In an embodiment, dissociation of the PAFM may also occur under ambient conditions as a result of the wellbore environment (e.g., temperature, pressure, pH, water content, etc.)

In an embodiment the FM comprises a degradable polymer of the type previously disclosed herein (i.e., DM), which degrades due to, *inter alia,* a chemical and/or radical process such as hydrolysis or oxidation. As may be appreciated by one of skill in the art upon viewing this disclosure, the degradability of a polymer may depend at least in part on its backbone structure. For example, the presence of hydrolyzable and/or oxidizable linkages within the backbone structure may yield a material that will degrade as described herein. As may also be appreciated by one of skill in the art upon viewing this disclosure, the rates at which such polymers degrade may be at least partially dependent upon polymer characteristics such as the type of repetitive unit, composition, sequence, length, molecular geometry, molecular weight, morphology (e.g., crystallinity, size of spherulites, and orientation), hydrophilicity, hydrophobicity, surface area, and type of additives. Additionally, the ambient downhole environment to which a given polymer is subjected may also influence how it degrades, (e.g., temperature, presence of moisture, oxygen, microorganisms, enzymes, pH, pressure, the like, and combinations thereof).

In an embodiment, the DM comprises a degradable polymer having an enhanced surface area. Without wishing to be limited by theory, the larger the surface area exposed to a medium and/or environment in which the material undergoes a reaction (e.g., hydrolytic degradation), the shorter the reaction time frame will be for a fixed amount of material, while keeping all the other conditions unchanged (e.g., same pressure, same temperature, etc.). For example, if polymeric material A is a nonporous solid having a mass x and a surface area y, then the foamed material of this disclosure obtained from polymer A that has the same mass x, may have a surface area of 2y, 5y, 10y, 20y, 50y, or 100y. As a result of having a larger surface area, the foamed material may display faster degradation times. In an embodiment, the FM displays a surface area that is increased with respect to the unfoamed material by a factor of about 15, alternatively by a factor of about 25, alternatively by a factor of about 50, alternatively by a factor of about 100, or alternatively by a factor of about 200.

In an embodiment the DM comprises aliphatic polyesters of the type previously disclosed herein. In such an embodiment, the DM may be degraded in the presence of an acid (e.g., in situ, downhole) or base catalyst via hydrolytic cleavage. Not intending to be bound by theory, during hydrolysis, carboxylic end groups are formed during chain scission and this may enhance the rate of further hydrolysis. This mechanism is known in the art as "autocatalysis," and is thought to make polyester matrices more bulk eroding.

In an embodiment, the DMs is degraded (e.g., *in situ*, downhole) via hydrolytic or aminolytic degradation. In an embodiment, degradation of the FM is carried out in the presence of an accelerator. Herein an accelerator refers to a material that catalyzes, promotes, initiates and/or increases the rate of degradation of the FM. In an embodiment, the DMs are provided within a portion of the subterranean formation with an accelerator. In an embodiment, the accelerator comprises a base solution such as an ammonium hydroxide solution, an alcoholic alkaline solution, an alkaline amine solution, or combinations thereof. Other examples of base solutions suitable for use as accelerators are described in more detail in U.S. Patent Publication No. 20100273685 A1.

In an embodiment, the accelerator used for the DMs degradation comprises water-soluble amines such as alkanolamines, secondary amines, tertiary amines, oligomers of aziridine, any derivatives thereof, or combinations thereof. Non-limiting examples of water-soluble amines suitable for use in conjunction with the methods of this disclosure are described in more detail in US20140116703 A1 and entitled "Wellbore Servicing Methods and Compositions Comprising Degradable Polymers".

In an embodiment, the FM when subjected to degradation conditions of the type disclosed herein (e.g., elevated temperatures and/or pressures) substantially degrades in about 4 h, alternatively about 6 h, or alternatively about 12 h. Herein "substantially degrades" refer to the loss of structural integrity such that the FM releases, is disassociated from and/or no longer confines greater than about 50% of the PM, alternatively greater than about 75% of the PM or alternatively greater than about 90% of the PM. In another embodiment, FMs of the type disclosed herein when subjected to a degradation agent substantially degrades in a time frame of less than about 1 week, alternatively less than about 2 days, or alternatively less than about 1 day.

In another embodiment, the FM comprises a material which is characterized by the ability to be degraded at bottom hole temperatures (BHT) of less than about 60 °C, alternatively less than about 82 °C, or alternatively less than about 104 °C (about 140 °F, alternatively less than about 180 °F, or alternatively less than about 220 °F).

Carrying proppants into the wellbore is generally accomplished by suspending proppants into a wellbore servicing fluid (e.g., fracturing fluid). The proppants may settle during the wellbore servicing due to their higher bulk density when compared to the density of the fracturing fluid. In an embodiment, PAFMs of the type disclosed herein may be advantageously used for suspending the proppant in a fracturing fluid. That is the FM helps to provide buoyancy to the PM and inhibit or reduce settling of the PM in the WSF. The improved suspending ability of the WSF comprising a PAFM may be evidenced by the particulate settling time (PST) of a wellbore servicing fluid containing PAFMs of the type disclosed herein. Herein the PST refers to the amount of time required for the particulates settled in a fluid to settle to the bottom of the fluid such that less than about 5% of the particulate remains suspended in the fluid. The PST may be determined by visual inspection. Methods and apparatuses that may be used to perform these tests are described in U.S. Pat. No. 6,782,735. A commercially available example of a device that may be used to perform these tests is a MIMIC device, available from Halliburton Energy Services, Inc. In an embodiment, the PST of a wellbore servicing fluid containing PAFMs of the type disclosed herein is about 100% greater than an otherwise similar wellbore servicing fluid lacking a PAFM of the type disclosed herein. In some embodiments the PST of a wellbore servicing fluid containing PAFMs of the type disclosed herein is about 100% greater than an otherwise identical wellbore servicing fluid containing a proppant material not associated with a foamed material.

Once downhole, the FM would degrade, and the space that was taken by the FM as part of the PAFM may become part of the flowing space (e.g., flow channels) in the proppant pack. In an embodiment, the PAFM advantageously provides for the formation of larger proppant flow channels proppant pack placed in the fractures, which in turn may lead to an advantageously increased hydrocarbon production. In an embodiment, the use of PAFMs may increase the proppant pack flow channel space by from about 10 % to about 60 %, alternatively from about 20% to about 50 %, or alternatively from about 30 % to about 40 %, based on the flow space that would be created by the same amount of proppant delivered in the fracture in the absence of a foamed material.

## Claims

1. A method of servicing a wellbore in a subterranean formation, the method comprising placing a wellbore servicing fluid comprising a proppant-associated foamed material into the subterranean formation via the wellbore and altering the structural integrity of the proppant-associated foamed material,;
wherein the proppant-associated foamed material comprises (i) a proppant and (ii) a foamed material comprising a degradable material; and
wherein the structural integrity of the proppant-associated foamed material is altered by contact with a degradation agent which degrades the degradable material.

2. The method of claim 1, wherein the foamed material further comprises a hydrocarbon-based material.

3. The method of claim 1 or claim 2, wherein the foamed material comprises an open-cell structure foam or a closed-cell structure foam.

4. The method of claim 2 or claim 3, wherein the hydrocarbon-based material comprises polyethylene, polypropylene, polystyrene, hydrocarbon-based rubber, or any combination thereof.

5. The method of any of claims 1-3, wherein the degradable material comprises a degradable polymer, wherein the degradable polymer optionally comprises polysaccharides, lignosulfonates, chitins, chitosans, proteins, proteinous materials, fatty alcohols, fatty esters, fatty acid salts, aliphatic polyesters, poly(lactides), poly(glycolides), poly(ε-caprolactones), polyoxymethylene, polyurethanes, poly(hydroxybutyrates), poly(anhydrides), aliphatic polycarbonates, polyvinyl polymers, acrylic-based polymers, poly(amino acids), poly(aspartic acid), poly(alkylene oxides), poly(ethylene oxides), polyphosphazenes, poly(orthoesters), poly(hydroxy ester ethers), polyether esters, polyester amides, polyamides, polyhydroxyalkanoates, polyethyleneterephthalates, polybutyleneterephthalates, polyethylenenaphthalenates, or any combination thereof, wherein the aliphatic polyester optionally comprises a compound represented by general formula I: 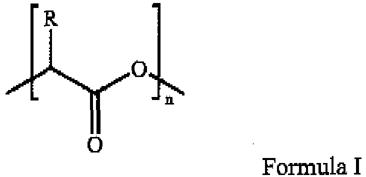 wherein n is an integer ranging from 75 to 10,000 and R is hydrogen, an alkyl group, an aryl group, an alkylaryl group, an acetyl group, a heteroatom, or any combination thereof.

6. The method of claim 5, wherein the degradable polymer comprises polylactic acid.

7. The method of any of claims 1-6, wherein the foamed material has a porosity of from 20 vol.% to 90 vol.%, and/or wherein the foamed material has a particle size of from 50 µm to 2,000 µm, and/or wherein the foamed material has a compressive strength of from 3,450 Pa to 345,000 Pa (0.5 psi to 50 psi).

8. The method of any of claims 1-7, wherein the foamed material has a bulk density of from 50 kg/m³ to 1000 kg/m³ (0.05 g/cc to 1 g/cc).

9. The method of any of claims 1-8, wherein the proppant comprises shells of nuts, seed shells, crushed fruit pits, processed wood material, glass, sintered bauxite, quartz, aluminum pellets, silica (sand), Ottawa sand, Brady sand, Colorado sand, resin-coated sand, gravel, synthetic organic particles, nylon pellets, high density plastic, teflon, rubber, ceramic, aluminosilicate, or any combination thereof.

10. The method of any of claims 1-9, wherein the proppant-associated foamed material comprises from 10 wt% to 50 wt.% proppant and from 50 wt.% to 90 wt.% foamed material based on the total weight of the proppant-associated foamed material.

11. The method of any of claims 1-10, wherein the proppant-associated foamed material is present in the wellbore servicing fluid in an amount of from 11.9 kg/m³ to 3000 kg/m³ (0.1 ppg to 25 ppg).

12. The method of any of claims 1-11, wherein the wellbore servicing fluid comprises a fracturing fluid.

13. The method of claim 1, wherein the structural integrity of the proppant-associated foamed material is additionally altered by compression, degradation via ambient conditions, or a combination thereof.

14. The method of any of claims 1-13, wherein the proppant, the foamed material or both are resin-coated.

15. A wellbore servicing fluid comprising a proppant-loaded foamed material comprising a polylactide, a resin-coated sand, and a carrier fluid.

## Patentansprüche

1. Verfahren zur Wartung eines Bohrloches in einer unterirdischen Formation, wobei das Verfahren das Anordnen eines Bohrloch-Wartungsfluids, enthaltend ein Proppant-assoziiertes, geschäumtes Material, in die unterirdische Formation über das Bohrloch und Ändern der strukturellen Integrität des Proppant-assoziierten geschäumten Materials enthält,
worin das Proppant-assoziierte geschäumte Material (i) ein Proppant und (ii) ein geschäumtes Material enthält, das ein abbaubares Material enthält, und
worin die strukturelle Integrität des Proppant-assoziierten geschäumten Materials geändert wird durch Kontakt mit einem Abbaumittel, das das abbaubare Material abbaut.

2. Verfahren nach Anspruch 1, worin das geschäumte Material weiterhin ein Material auf Kohlenwasserstoffbasis enthält.

3. Verfahren nach Anspruch 1 oder 2, worin das geschäumte Material einen Schaum mit offener Zellstruktur oder geschlossener Zellstruktur enthält.

4. Verfahren nach Anspruch 2 oder 3, worin das Material auf Kohlenwasserstoffbasis Polyethylen, Polypropylen, Polystyrol, Kautschuk auf Kohlenwasserstoffbasis oder irgendeine Kombination davon enthält.

5. Verfahren nach einem der Ansprüche 1 bis 3, worin das abbaubare Material ein abbaubares Polymer enthält, worin das abbaubares Polymer wahlweise Polysaccharide, Lignosulfonate, Chitine, Chitosane, Proteine, proteinhaltige Materialien, Fettalkohole, Fettester, Fettsäuresalze, aliphatische Polyester, Poly(lactide), Poly(glycolide), Poly(ε-caprolactone), Polyoxymethylen, Polyurethane, Poly(hydroxybutyrate), Poly(anhydride), aliphatische Polycarbonate, Polyvinylpolymere, Polymere auf Acrylbasis, Poly(aminosäuren), Poly(asparaginsäure), Poly(alkylenoxide), Poly(ethylenoxide), Polyphosphazene, Poly(orthoester), Poly(hydroxyesterether), Polyetherester, Polyesteramide, Polyamide, Polyhydroxyalkanoate, Polyethylenterephthalate, Polybutylenterephthalate, Polyethylennaphthalenate oder irgendeine Kombination davon enthält, worin der aromatische Polyester wahlweise eine Verbindung mit der allgemeinen Formel I enthält: 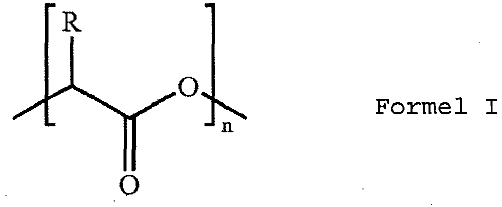 worin n eine ganze Zahl im Bereich von 75 bis 10000 und R Wasserstoff, Alkylgruppe, Arylgruppe, Alkylarylgruppe, Acetylgruppe, Heteroatom oder irgendeine Kombination davon sind.

6. Verfahren nach Anspruch 5, worin das abbaubare Polymer Polymilchsäure enthält.

7. Verfahren nach einem der Ansprüche 1 bis 6, worin das geschäumte Material eine Porosität von 20 Vol.-% bis 90 Vol.-% hat und/oder worin das geschäumte Material eine Teilchengröße von 50 µm bis 2000 µm hat und/oder worin das geschäumte Material eine Kompressionsstärke von 3450 Pa bis 345000 Pa (0,5 psi bis 50 psi) hat.

8. Verfahren nach einem der Ansprüche 1 bis 7, worin das geschäumte Material eine Schüttdichte von 50 kg/m³ bis 1000 kg/m³ hat (0,05 g/cc bis 1 g/cc).

9. Verfahren nach einem der Ansprüche 1 bis 8, worin das Proppant Schalen von Nüssen, Keimhüllen, zerstoßene Fruchtkerne, bearbeitetes Holzmaterial, Glas, gesindertes Bauxit, Quarz, Aluminiumpellets, Silica (Sand), Ottawa-Sand, Brady-Sand, Colorado-Sand, harzbeschichteten Sand, Kiesel, synthetische organische Teilchen, Nylonpellets, Kunststoff hoher Dichte, Teflon, Kautschuk, Keramik, Aluminosilicat oder irgendeine Kombination davon enthält.

10. Verfahren nach einem der Ansprüche 1 bis 9, worin das Proppant-assoziierte geschäumte Material von 10 Gew.-% bis 50 Gew.-% Proppant und von 50 Gew.-% bis 90 Gew.-% geschäumtes Material enthält, basierend auf dem Gesamtgewicht des Proppant-assoziierten, geschäumten Materials.

11. Verfahren nach einem der Ansprüche 1 bis 10, worin das Proppant-assoziierte, geschäumte Material in dem Bohrloch-Wartungsfluid in einer Menge von 11,9 kg/m³ bis 3000 kg/m³ (0,1 ppg bis 25 ppg) enthalten ist.

12. Verfahren nach einem der Ansprüche 1 bis 11, worin das Bohrloch-Wartungsfluid ein Frakturierfluid enthält.

13. Verfahren nach Anspruch 1, worin die strukturelle Integrität des Proppant-assoziierten, geschäumten Materials zusätzlich durch Kompression, Abbau über Umgebungsbedingungen oder eine Kombination davon geändert wird.

14. Verfahren nach einem der Ansprüche 1 bis 13, worin das Proppant, das geschäumte Material oder beides harzbeschichtet sind.

15. Bohrloch-Wartungsfluid, umfassend ein Proppantbeladenes, geschäumtes Material, enthaltend ein Polylactid, einen harzbeschichteten Sand und ein Trägerfluid.

## Revendications

1. Procédé d'entretien d'un trou de forage dans une formation souterraine, le procédé comprenant la mise en place d'un fluide d'entretien de trou de forage comprenant une matière expansée associée à un agent de soutènement dans la formation souterraine via le trou de forage et l'altération de l'intégrité structurelle de la matière expansée associée à un agent de soutènement ;
dans lequel la matière expansée associée à un agent de soutènement comprend (i) un agent de soutènement et (ii) une matière expansée comprenant une matière dégradable ; et
dans lequel l'intégrité structurelle de la matière expansée associée à un agent de soutènement est altérée par le contact avec un agent de dégradation qui dégrade la matière dégradable.

2. Procédé selon la revendication 1, dans lequel la matière expansée comprend en outre une matière à base d'hydrocarbure.

3. Procédé selon la revendication 1 ou la revendication 2, dans lequel la matière expansée comprend une mousse de structure à alvéoles ouvertes ou une mousse de structure à alvéoles fermées.

4. Procédé selon la revendication 2 ou la revendication 3, dans lequel la matière à base d'hydrocarbure comprend le polyéthylène, le polypropylène, le polystyrène, un caoutchouc à base d'hydrocarbure, ou l'une quelconque de leurs combinaisons.

5. Procédé selon l'une quelconque des revendications 1 à 3, dans lequel la matière dégradable comprend un polymère dégradable, dans lequel le polymère dégradable comprend facultativement des polysaccharides, des lignosulfonates, des chitines, des chitosanes, des protéines, des matières protéiques, des alcools gras, des esters gras, des sels d'acide gras, des polyesters aliphatiques, des poly(lactides), des poly(glycolides), des poly(∈-caprolactones), du polyoxyméthylène, des polyuréthanes, des poly(hydroxybutyrates), des poly(anhydrides) des polycarbonates aliphatiques, des polymères polyvinyliques, des polymères à base d'acrylique, des poly(acides aminés), du poly(acide aspartique), des poly(oxydes d'alkylène), des poly(oxydes d'éthylène), des polyphosphazènes, des poly(orthoesters), des poly(hydroxy ester éthers), des polyéther esters, des polyester amides, des polyamides, des polyhydroxyalcanoates, des polyéthylènetéréphtalates, des polybutylènetéréphtalates, des polyéthylènenaphtalénates, ou l'une quelconque de leurs combinaisons, dans lequel le polyester aliphatique comprend facultativement un composé représenté par la formule générale I : 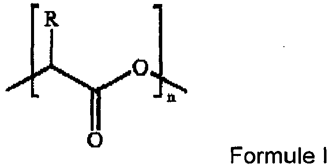 dans laquelle n est un entier allant de 75 à 10 000 et R est l'hydrogène, un groupe alkyle, un groupe aryle, un groupe alkylaryle, un groupe acétyle, un hétéroatome, ou l'une quelconque de leurs combinaisons.

6. Procédé selon la revendication 5, dans lequel le polymère dégradable comprend du polyacide lactique.

7. Procédé selon l'une quelconque des revendications 1 à 6, dans lequel la matière expansée a une porosité de 20 % en volume à 90 % en volume, et/ou dans lequel la matière expansée a une taille de particule de 50 µm à 2 000 µm, et/ou dans lequel la matière expansée a une résistance à la compression de 3 450 Pa à 345 000 Pa (0,5 psi à 50 psi).

8. Procédé selon l'une quelconque des revendications 1 à 7, dans lequel la matière expansée a une masse volumique apparente de 50 kg/m³ à 1 000 kg/m³ (0,05 g/cm³ à 1 g/cm³).

9. Procédé selon l'une quelconque des revendications 1 à 8, dans lequel l'agent de soutènement comprend des coques de noix, des coques de graines, des noyaux de fruits écrasés, un matériau de bois manufacturé, du verre, de la bauxite frittée, du quartz, des pastilles d'aluminium, de la silice (sable), du sable d'Ottawa, du sable de Brady, du sable de Colorado, du sable revêtu de résine, du gravier, des particules organiques synthétiques, des pastilles de nylon, du plastique haute densité, du téflon, du caoutchouc, de la céramique, de l'aluminosilicate, ou l'une quelconque de leurs combinaisons.

10. Procédé selon l'une quelconque des revendications 1 à 9, dans lequel la matière expansée associée à un agent de soutènement comprend de 10 % en poids à 50 % en poids d'agent de soutènement et de 50 % en poids à 90 % en poids de matière expansée sur la base du poids total de la matière expansée associée à un agent de soutènement.

11. Procédé selon l'une quelconque des revendications 1 à 10, dans lequel la matière expansée associée à un agent de soutènement est présente dans le fluide d'entretien de trou de forage dans une quantité de 11,9 kg/m³ à 3 000 kg/m³ (0,1 ppg à 25 ppg).

12. Procédé selon l'une quelconque des revendications 1 à 11, dans lequel le fluide d'entretien de trou de forage comprend un fluide de fracturation.

13. Procédé selon la revendication 1, dans lequel l'intégrité structurelle de la matière expansée associée à un agent de soutènement est en outre altérée par compression, dégradation par des conditions ambiantes, ou une combinaison de celles-ci.

14. Procédé selon l'une quelconque des revendications 1 à 13, dans lequel l'agent de soutènement, la matière expansée ou les deux sont revêtus de résine.

15. Fluide d'entretien de trou de forage comprenant une matière expansée chargée d'un agent de soutènement comprenant un polylactide, du sable revêtu de résine et un fluide porteur.
